# EUROPÄISCHE PATENTSCHRIFT

(11) **EP 4 417 834 B1**
(45) Veröffentlichungstag und Bekanntmachung des Hinweises auf die Patenterteilung: **17.09.2025**
(21) Anmeldenummer: 23216713.0
(22) Anmeldetag: 14.12.2023
(51) Int. Cl.: F16G 1/28, B62D 5/00

(54) **SCHRÄGVERZAHNTER ANTRIEBSRIEMEN**
HELICAL DRIVE BELT
COURROIE D'ENTRAÎNEMENT À DENTURE HÉLICOÏDALE

(30) Priorität: 17.02.2023 DE 102023201403
(43) Veröffentlichungstag der Anmeldung: 21.08.2024
(73) Patentinhaber: ContiTech Deutschland GmbH, 30175 Hannover (DE)
(72) Erfinder: Dr. Kanzow, Henning, 30173 Hannover (DE); Sener, Guevenc, 30173 Hannover (DE); Dr. Dikmans, Antonius, 30173 Hannover (DE); Finzelberg, Jan, 30173 Hannover (DE)
(74) Vertreter: Preusser, Andrea

(56) Entgegenhaltungen:
- WO-A1-2021/028133
- WO-A1-2023/046247
- DE-A1- 102019 100 654
- DE-A1- 102021 210 540

## Beschreibung

Die Erfindung betrifft einen schrägverzahnten Antriebsriemen gemäß dem Oberbegriff des Anspruchs 1. Weiterhin betrifft die Erfindung ein Lenkungsgetriebe in einer elektromechanischen Lenkung eines Kraftfahrzeugs gemäß Anspruch 13. DE 10 2011 002 230 A1 offenbart einen Antriebsriemen mit einem Grundkörper aus einem polymeren Werkstoff und einem Zugstrang aus Aramid. Der Zugstrang weist zwei oder drei Litzen auf, die jeweils aus einer Gruppe von Garnen gebildet sind. Der Zugstrang weist ein Verhältnis des Zwirnfaktors der Garne zum Zwirnfaktor der Litzen zwischen 0,7 und 2,5. Solche Antriebsriemen werden in Fahrzeugen zum Antrieb von Nebenaggregaten verwendet.

US 2007137766 A1 beschreibt einen schrägverzahnten Antriebsriemen der gleich gedrehte Zugstränge umfasst, wobei die Drehrichtung der Zugstränge und der Schrägungswinkel der Verzahnung in einem bestimmten winkelabhängigen Verhältnis zueinander entgegengesetzt sind. Als Zugstrangmaterialien sind sowohl Aramid als auch Glas offenbart. Der Zugstrang ist aus mehreren Litzen gebildet. Nachteilig ist, dass die Ausdrehung des Zugstrangs sich nur an dem Schrägungswinkel der Zähne orientiert und nicht an der an den sonstigen Anforderungen des Produktes wie die Längssteifigkeit oder die Biegewechselbeständigkeit. WO2021/028133A1 offenbart ein weiteres Beispiel für einen Riemen aus dem Stand der Technik.

Die JPH09159000 A beschreibt einen Zahnriemen mit Zugstrang, der einen Durchmesser von 0,1 bis 0,2 mm besitzt und aus einfach gedrehten Aramidfilamenten besteht. Solch dünne Corde können bei der Übertragung von größeren Momenten reißen und können nachteiliger Weise deshalb nur in niedrig belasteten Trieben eingesetzt werden.

Auch für industrielle Anwendungen werden Zahnriemen mit Zugsträngen aus Aramid eingesetzt. Diese Zahnriemen bestehen üblicherweise aus Polychloroprenkautschuk oder Polyurethan und zeigen durch die eingebetteten Zugstränge aus Aramid eine hohe Längssteifigkeit und damit eine entsprechende Positionsgenauigkeit.

Ein mittlerweile wichtiges Anwendungsgebiet für Antriebsriemen sind Servolenkungen in Kraftfahrzeugen. Elektromechanische Servo-Lenksystem ersetzen in heutigen Kraftfahrzeugen zunehmend andere Systeme der Lenkunterstützung, wie zum Beispiel elektrohydraulische Lenksysteme und natürlich auch direkt lenkende Systeme. Einer der Gründe hierfür ist die relativ einfache Möglichkeit, solche Systeme elektronisch zu steuern und zu regeln, insbesondere im Zusammenhang mit der fortschreitenden Verbreitung von Fahrerassistenzsystemen, wie etwa Spurhaltesystemen, Einparksystemen etc., bis hin zu Systemen für das autonome Fahren.

Die elektromotorische Unterstützung solcher Servo-Lenksysteme wird über ein Getriebe entweder auf die Lenksäule oder aber auf eine Lenkstange/Zahnstange aufgebracht. Bisher ist üblicherweise auch noch ein mechanischer Durchgriff der Lenkraddrehung auf die Lenkstange vorgesehen, so dass die Servo-Lenkung ihrem Namen entsprechend über die verschiedenen Arten der Getriebe lediglich ein Unterstützungsmoment überträgt. Bei der Entwicklung zu Steer-by-Wire Systemen erfolgt dann die Lenkung dann allerdings nur noch durch die elektronische Sensierung von Lenkbewegungen am Lenkrad und deren Übertragung auf entsprechend gesteuerte Lenkmotoren.

Für Servo-Lenksysteme, für die mittlerweile aufkommenden autonomen Fahrfunktionen und erst recht für Fahrzeuge mit Steer-by-Wire Systemen ist die Lenkung natürlich ein absolut sicherheitsrelevantes Bauteil.

Das gilt auch für die dort eingesetzten Getriebe. Neben den oft verwendeten Schneckengetrieben sind bei elektromechanischen Servo-Lenksystemen auch Riemengetriebe im Einsatz, bei denen das durch einen Elektromotor erzeugte Unterstützungsmoment über einen üblicherweise schrägverzahnten Zahnriemen und entsprechend ausgebildete Zahnräder von der Motorwelle z.B. auf eine auf die Zahnstange wirkende Kugelgewindespindel übertragen wird. Solche Zahnriemen müssen erhebliche Lenkkräfte übertragen und Schwingungen aushalten und müssen mit einer hohen Sicherheit und Redundanz ausgelegt werden, sodass innerhalb der Wartungsintervalle und Wartungsmaßnahmen keinerlei Schädigungen zu befürchten sind.

Die Zahnriemen bestehen grundsätzlich aus einem so genannten Unterbau, der das Zahnprofil aufweist, mindestens einer Lage von in Riemenlängsrichtung angeordneten Zugsträngen bzw. Festigkeitsträgern und aus dem Riemenrücken. Zahnprofil und Riemenrücken können dabei je nach Anwendungsfall mit weiteren Beschichtungen oder Geweben versehen sein.

Üblicherweise kommen hier Zahnriemen aus elastomerem Material zum Einsatz, die mit Zugsträngen bzw. Festigkeitsträgern aus z.B. Glasfasern versehen sind. Solche Zugstränge aus Glasfasern haben sich bewährt aufgrund ihrer geringen Wärmeausdehnung, ihrer Temperaturresistenz und insbesondere aufgrund ihrer dynamischen Stabilität, d.h. ihrer Toleranz gegenüber hochfrequenten, wechselnden Schwingungsbelastungen, wie sie in einem Lenkgetriebe auftreten können. Auch bei diesen Bedingungen behalten Zahnriemen mit Zugsträngen aus Glasfasern lange ihre Reißfestigkeit.

DE102019212056A1 offenbart einen schrägverzahnten Antriebsriemen mit einem Aramidzugstrang aus zwei Litzen, geeignet zur Anwendung in Lenkungsgetrieben einer elektromechanischen Lenkung eines Kraftfahrzeuges. Nachteiliger Weise ist auch in diesem Fall die Herstellung des Aramidzugstrangs aufwendig und kostenintensiv, da sowohl die Litzen als auch der Cord mit hohen Drehungen versehen werden müssen.

Ein anderes wesentliches Problem bei Zahnriemen ist deren Geräuschentwicklung im Betrieb. Insbesondere bei schnell laufenden Antrieben kann das Zahneingriffsgeräusch sehr laut sein. Dies kann verringert werden, in dem man den Riemen mit einer aus dem Stand der Technik bekannten Schrägverzahnung versieht.

Außerdem verringert ein möglichst kleiner Zahnabstand den Geräuschpegel. Jedoch führt ein geringer Zahnabstand auch dazu, dass die Zähne kleiner werden müssen. Das wiederum hat zur Folge, dass Riemen mit kleinerem Zahnabstand bzw. kleinerer Zahnteilung bei höherer Belastung eher überspringen oder dass die Zähne in Folge einer zu hohen Belastung abscheren.

Es ergibt sich hieraus ein Zielkonflikt zwischen einer hohen Leistungsübertragung und gleichzeitig guten akustischen Eigenschaften.

Daher liegt der Erfindung die Aufgabe zugrunde, einen Zahnriemen bereit zu stellen, der für die hochfrequenten Schwell- und Biegebelastungen in einem Lenkungsgetriebe gut geeignet ist, der gegenüber dynamischen Belastungen stabil bleibt, der unempfindlich gegenüber Knicken und gegenüber Handhabungs- und Transportbelastungen ist und der einfach und mit den üblichen Methoden kostengünstig hergestellt werden kann. Weiterhin soll der Zahnriemen geringe Laufgeräusche erzeugen und gleichzeitig eine größtmögliche Leistungsübertragung ermöglichen. Zusätzlich soll die Dauerhaltbarkeit bzw. die Laufzeit des Zahnriemens erhöht werden.

Die Lösung dieser Aufgabe ergibt sich durch einen schrägverzahnten Antriebsriemen mit den Merkmalen des unabhängigen Anspruchs 1.

Anspruch 13 offenbart ein Lenkungsgetriebe in einer elektromechanischen Lenkung eines Kraftfahrzeugs mit einem erfindungsgemäßen schrägverzahnten Antriebsriemen.

Weitere vorteilhafte Ausbildungen sind in den abhängigen Ansprüchen offenbart.

Der in dem Anspruch 1 offenbarte erfindungsgemäße schrägverzahnte Antriebsriemen umfasst einen Grundkörper aus elastomerem Material mit in einer Zahnteilung einander beabstandeten Zähnen, wobei in dem Grundkörper in einer Längsrichtung eine Mehrzahl von Zugsträngen angeordnet und von dem elastomeren Material des Grundkörpers umschlossen ist. Die Zugstränge sind aus einem einfach gedrehten Garn aus p-Aramid aufgebaut. Das Para-Aramid, kurz p-Aramid, kann bevorzugt als Monofilament, Multifilament oder Stapelfaser vorliegen, wobei die Verwendung eines Multifilaments besonders bevorzugt ist. Erfindungsgemäß beträgt der Außendurchmesser des Zugstrangs zwischen 0,3 mm bis 0,45 mm. Die Drehung des Garnes beträgt zwischen 210 bis 290 tpm (turns per meter; Drehungen pro Meter).

Der Vorteil dieser Ausbildung besteht darin, dass nur so viel an Drehungen durchgeführt werden, wie es für den Anwendungszweck erforderlich ist. Es hat sich überraschender Weise herausgestellt, dass diese gegenüber den allgemein üblichen Garndrehungen vergleichsweise geringe Drehung des Garnes eine gute Biegewechselbeständigkeit bereitstellt und in einer besonders hohen Laufzeit des Antriebsriemens resultiert. Gleichzeitig bleibt die gute Schneidfähigkeit der Korde erhalten, die in dem Herstellprozess benötigt wird. Außerdem kann ein gutes Geräuschverhalten bzw. eine geringe Geräuschemission des Riemens erzielt werden.

Der Winkel zwischen der Längsrichtung des Riemens und der Längsrichtung des Zahnes, die im Wesentlichen quer zur Längsrichtung des Riemens orientiert ist, ist kleiner oder größer 90°. Durch diese Schrägverzahnung kann die Geräuschemission des Riemens verbessert werden.

Zumeist kommen Elastomere auf der Basis vulkanisierbarer Kautschukmischungen, umfassend wenigstens eine Kautschukkomponente sowie Mischungsingredienzien, zum Einsatz.

Grundsätzlich können alle der fachkundigen Person bekannten Elastomere verwendet werden. Die Begriffe Kautschuk und Elastomer werden in dieser Schrift synonym verwendet. In einer bevorzugten Ausführungsform ist das Elastomer ausgewählt aus der Gruppe bestehend aus Ethylen-Propylen-Mischpolymerisat (EPM) oder Ethylen-Propylen-Dien-Mischpolymerisat (EPDM) oder Nitrilkautschuk (NBR) oder (teil)hydrierter Nitrilkautschuk (HNBR) oder Fluor-Kautschuk (FKM) oder Chloropren-Kautschuk (CR) oder Naturkautschuk (NR) oder Styrol-Butadien-Kautschuk (SBR) oder Isopren-Kautschuk (IR) oder Butylkautschuk (IIR) oder Brombutylkautschuk (BIIR) oder Chlorbutylkautschuk (CIIR) oder Butadien-Kautschuk (BR) oder Chloriertes Polyethylen (CM) oder Chlorsulfoniertes Polyethylen (CSM) oder Polyepichlorhydrin (ECO) oder Ethylen-Vinylacetat-Kautschuk (EVA) oder Acrylat-Kautschuk (ACM) oder Ethylen-Acrylat-Kautschuk (AEM) oder Silikonkautschuk (MQ, VMQ, PVMQ, FVMQ) oder fluorierter Methylsilikonkautschuk (MFQ) oder perfluorinierter Propylen-Kautschuk (FFPM) oder Perfluorcarbon-Kautschuk (FFKM) oder Polyurethan (PU). Die genannten Kautschuke können hierbei allein oder im Verschnitt, d.h. als Blend, eingesetzt werden.

Auf vorteilhafte Weise weist zumindest das elastomere Material im Bereich des unverzahnten Riemenrückens 70 bis 100 phr wenigstens eines Polyalphaolefinkautschuk auf. Der Polyalphaolefinkautschuk kann insbesondere ein Ethylen-Propylen-Copolymer (EPM) oder ein Ethylen-Propylen-Dien-Kautschuk (EPDM) oder eine Kombination aus EPM oder EPDM sein.

Polyalphaolefinkautschuke wie EPDM oder EPM haben gegenüber Polychloropren oder Polyurethan den entscheidenden Vorteil der verbesserten Tieftemperaturflexibilität und der entscheidend besseren Alterungs- und Ozonbeständigkeit. Zahnriemen aus EPDM können außerdem bei Temperaturen bis zu -40°C eingesetzt werden, was für Lenkungsriemen ein wichtiger Vorteil ist. Diese Materialien zeichnen sich ebenfalls durch eine hohe Wärmebeständigkeit aus, verspröden daher weniger und erreichen auch eine sehr gute Abriebbeständigkeit. Das elastomere Material kann außerdem bevorzugt peroxidisch vernetzt sein.

Zur Vermeidung der Drall- oder Ablaufneigung des gesamten Antriebsriemens können die Garne von im Antriebsriemen nebeneinander liegenden Zugsträngen abwechselnd oder gruppenweise abwechselnd im S-Schlag und im Z-Schlag gedreht sein.

Ein Garn ist gemäß DIN 60 900 Teil 1 ein linienförmiges Gebilde, das aus textilen Faserstoffen hergestellt ist.

Erfindungsgemäß beträgt der Außendurchmesser des Zugstrangs zwischen 0,3 bis 0,45 mm, bevorzugt zwischen 0,35 bis 0,42 mm. Hierbei können die zuvor beschriebenen mechanischen und wirtschaftlichen Faktoren am Besten in Einklang gebracht werden.

Der Vorteil einer solchen Konstruktion von Zugsträngen und Riemen besteht im Wesentlichen darin, dass durch die Feinheit und durch die Geometrie der Garne und der Zugstränge eine hohe Reißfestigkeit gegenüber Beanspruchungen bei hochfrequenten Belastungen und Biegewechseln erreicht wird, die bei anderen Zugstrangkonstruktionen größeren Durchmessers nicht möglich ist.

Gegenüber Zugsträngen mit größerem Außendurchmesser können bedingt durch einen geringeren Materialeinsatz außerdem wirtschaftliche Vorteile generiert werden.

Darüber hinaus verlieren Zugstränge mit größerem Außendurchmesser mit kleiner werdenden Biegeradien im Betrieb ihre Reißfestigkeit. Der erfindungsgemäße Zugstrang kann daher insbesondere für Riemengetriebe mit Riemenscheiben kleinen Durchmessers geeignet sein, da ein Abbau der Reißfestigkeit verglichen mit Zugsträngen größeren Durchmessers geringer ausfällt.

Darüber hinaus ist die Reißfestigkeit dünnerer Zugstränge geringer, weshalb zur Kompensation der geringeren Reißfestigkeit eine größere Anzahl von Zugsträngen in dem Riemen angeordnet werden müsste. Daher ist gegenüber Zugsträngen mit einem Außendurchmesser von kleiner 0,3 mm die Herstellung des Antriebsriemens wirtschaftlicher, da die Zeit für das Umspulen des Zugstrangs um ein zylindrisches Werkzeug, auf dem der Rohling des Riemens aufgebaut wird, geringer ausfällt.

Mit kleiner werdender Zahnteilung, also einem geringeren Abstand zweier Zähne des Riemens zueinander, kann das Geräuschverhalten optimiert werden. **In** diesem Zusammenhang reduziert sich wiederum die Leistungsübertragungsfähigkeit, weshalb der Riemen zur Übertragung derselben Leistung bei kleiner werdender Zahnteilung in der Breite größer ausgeführt werden muss.

Ein gleichzeitig gutes Geräuschverhalten und ein hohes Leistungsübertragungsverhalten kann erreicht werden, wenn der Zahnriemen mit einer Teilung zwischen 1,5 mm und 2,5 mm und einer Breite zwischen 10 mm bis 35 mm hergestellt wird. Der positive Einfluss auf die Akustik der kleineren Teilung ist dabei größer als der negative Einfluss einer größeren Riemenbreite.

Es zeigt sich außerdem als besonders vorteilhaft, dass Zugstränge aus Para-Aramid verglichen zu aus dem Stand der Technik bekannten Glaskorden eine größere Knickbeständigkeit, oder mit anderen Worten einen geringeren Reißfestigkeitsabbau bei Knickbeanspruchung aufweisen.

Gemäß einem weiteren Aspekt der vorliegenden Erfindung beträgt das Gewicht des Zugstrangs zwischen 200 bis 2000 dtex.

Gemäß **DIN** 60 900 Teil 2 wird mit dem Tex-System die Feinheit, oder auch längenbezogene Masse eines Garnes angegeben. Mit anderen Worten repräsentiert das Tex-System den Quotienten aus Masse und Länge des Garnes. Ein Dezitex, kurz dtex, entspricht 1 dg/km.

Innerhalb des angegebenen Gewichtsbereiches können die besten Ergebnisse bei gleichzeitig kostengünstiger Herstellung erzielt werden.

Gemäß einem weiteren Aspekt der vorliegenden Erfindung beträgt das Gewicht des Zugstrangs zwischen 400 dtex bis 1500 dtex.

Hierbei können die zuvor beschriebenen mechanischen und wirtschaftlichen Faktoren am besten in Einklang gebracht werden.

Gemäß einem weiteren vorteilhaften Aspekt der vorliegenden Erfindung beträgt die Drehung des Garns zwischen 210 bis 250 tpm (turns per meter; Drehungen pro Meter).

Hierbei sind die Reißfestigkeit und die Biegewechselbeständigkeit der Zugstränge und somit des Gesamt-Riemens auf einem besonders guten Niveau.

Eine weitere vorteilhafte Ausbildung besteht darin, dass der Zugstrang eine Innenpräparation aufweist, wobei die Innenpräparation zu 25 bis 60 Volumen % Elastomerpartikel aufweist.

Die Elastomerpartikel weisen bevorzugt hydrierten Nitrilkautschuk (HNBR) und/oder Chlorsulfoniertes Polyethylen (CSM) und/oder Styrol-Butadien-Kautschuk (SBR) und/oder Chloropren-Kautschuk (CR) und/oder Vinylpyridin (VP) und/oder Naturkautschuk (NR) auf. Besonders bevorzugt sind Innenpräparationen, die Elastomerpartikel aus SBR oder VP sowie Blends davon enthalten. Mit Innenpräparation ist gemeint, dass die Zugstränge nicht nur von außen und ggfs. in den äußeren Schichten präpariert sind, sondern die Präparation auch im Inneren des Zugstrangen zwischen den Filamenten vorhanden ist. Im Gegensatz dazu gibt es Außenpräparationen, die sich dadurch auszeichnen, dass sie bei Zugsträngen aus Filamentgarnen maximal drei Filamentlagen in den Zugstrang reinreichen. Für eine optimale Haftung kann vorzugsweise jedes einzelne Filament eines Garns eine Innenpräparation aufweisen.

Gemäß einem weiteren Aspekt der vorliegenden Erfindung weist die Innenpräparation einen Duroplast oder einen Thermoplast auf. Der Duroplast der Zugstrangpräparation ist vorzugsweise aus vernetztem Bismaleinimid oder vernetztem Resorcinformaldehyd ausgebildet. Die Kombination aus Resorcinformaldehyd und fein verteilten Elastomerpartikeln ist unter dem Begriff "Resorcinformaldehydlatex" ("RFL") bekannt. Die Kombination aus Bismaleinimid und fein verteilten Elastomerpartikeln kann analog dazu als "Bismaleinimidlatex" bezeichnet werden. Die Innenpräparation bildet gleichzeitig eine Haftschicht zur besseren Anbindung des Garns an das elastomere Material des Grundkörpers.

Zur Verbesserung der Haftung kann der Zugstrang zusätzlich neben der Innenpräparation mit einer Außenpräparation ausgerüstet sein, die bevorzugt vor der Vulkanisation Dinitrosobenzol (DNB) enthält. Das Dinitrosobenzol sorgt für einen stärkere Vernetzung der Kautschukmischung in der Nähe des Zugstrangs, was eine Erhöhung der Haftung bewirken kann.

Eine weitere vorteilhafte Ausbildung besteht darin, dass der Winkel der Schrägverzahnung bezogen auf eine Achse quer zur Längsrichtung des Antriebsriemens zwischen 4° bis 8° beträgt.

Hierbei lassen sich auf vorteilhafte Weise gute akustische Eigenschaften bei gleichzeitig tolerierbaren Lateralkräften erzielen.

Gemäß einem weiteren Aspekt der vorliegenden Erfindung beträgt die Zahnteilung zwischen 1,5 bis 2,5 mm.

Eine Teilung in diesem Bereich bietet den besten Kompromiss zwischen guten akustischen Eigenschaften und einer ausreichenden Kraftübertragungsfähigkeit.

Gemäß einem weiteren Aspekt der vorliegenden Erfindung beträgt die Breite des Antriebsriemens mindestens das 6-fache der Zahnteilung.

Ein derartiges Verhältnis zwischen der Teilung und der Riemenbreite bietet besonders vorteilhafte akustische Eigenschaften und eine ausreichend hohe Kraftübertragungsfähigkeit.

Gemäß einem weiteren Aspekt ist der erfindungsgemäße Antriebsriemen neben anderen Anwendungsgebieten aufgrund der Belastungssituation besonders geeignet, in einem Lenkungsgetriebe in einer elektromechanischen Lenkung eines Kraftfahrzeugs eingesetzt zu werden.

Die Erfindung soll nun anhand von Vergleichs- und Ausführungsbeispielen, die in der Tabelle 1 zusammengefasst sind, näher erläutert werden.

Für alle Beispiele wurde jeweils eine Spezifikation eines schrägverzahnten Zahnriemens mit der gleichen Elastomermischung auf Basis von peroxidisch vernetztem EPDM und dem gleichen Zahngewebe aus PA66 gewählt. Die Zahnteilung bzw. der Zahnabstand beträgt 2 mm. Die Zahnriemen weisen zwei parallel gespulte Zugstränge mit entgegengesetzter Drehrichtung ("S" und "Z") mit einem einfach gedrehten Garn aus Para-Aramidfilamenten mit einem Längengewicht von 1100 dtex auf.

Die erfindungsgemäßen Spezifikationen E1 bis E2 werden in der Laufzeit gegenüber Vergleichsspezifikationen V1 bis V3 verglichen. Bei den Vergleichsspezifikationen variieren im Wesentlichen die Anzahl der Drehung der Zugstränge sowie die Zugstrangdicke bzw. Corddicke. Die Vergleichsspezifikationen V1 bis V3 weisen eine Außenpräparation aus RFL auf. Die erfindungsgemäßen Spezifikationen E1 bis E2 weisen hingegen eine Innenpräparation der Zugstränge auf, die fein verteilte Elastomerpartikel enthält, wobei der Duroplast bei E2 ein Resorcinformaldehyd und bei E1 ein vernetztes Bismaleinimid ist. Außerdem weisen die Zugstränge aller Spezifikationen (V1 bis V3 sowie E1 und E2) eine zusätzliche Außenpräparation auf, die Dinitrosobenzol (DNB) vor der Vulkanisation enthielt.

Ermittelt wurde die Laufzeit der Riemen bis zu deren Versagen. Die Zielvorgabe für das Bestehen der Prüfung liegt bei einer Laufzeit von mehr als 300 Stunden. Typische Schadensmechanismen sind Riemenrisse oder das Abscheren von Zähnen.

Die Prüfung erfolgt unter einer konstanten Umgebungstemperatur von 120 °C mit einer Toleranz von +/- 3 °C. Die Riemen werden in einer Breite von 12 mm bei einer Länge von 310 mm auf einem Zweischeibentrieb dynamisch mit reversierender Drehrichtung geprüft. Der Zweischeibentrieb hat eine Übersetzung, wobei die erste Zahnscheibe 41 Zähne und die zweite Zahnscheibe 117 Zähne aufweist. Die Zahnteilung, die als Abstand zwischen zwei Zähnen verstanden werden kann, beträgt 2 mm. Die Riemen werden mit einer Achskraft von 167 N bei einer Toleranz von +/- 10 N vorgespannt. Die Zyklusdauer einer Drehrichtung beträgt 3 Sekunden bei einer Toleranz von +/- 0,1 Sekunden, wobei die erste Zahnscheibe 5 Umdrehungen nach links oder rechts mit einer Toleranz von +/- 0,3 Umdrehungen durchführt. Die maximale Antriebsdrehzahl der ersten Zahnscheibe beträgt 285 Umdrehungen pro Minute mit einer Toleranz von +/- 10 Umdrehungen pro Minute. Das maximale Abtriebsdrehmoment an der zweiten Zahnscheibe beträgt 13 Nm bei einer Toleranz von +/- 1 Nm.

Anhand der Tabelle 1 ist zu erkennen, dass sich ausreichend gute Laufzeiten mit einem einfach gedrehten p-Aramidgarn mit einer erfindungsgemäßen Corddicke und einer ersten Drehung innerhalb des erfindungsgemäßen Bereichs erzielen lassen, siehe E1 bis E2.

**Tabelle 1:**

| Spezifikation | V1 | V2 | V3 | E1 | E2 |
|---|---|---|---|---|---|
| Garnmaterial | p-Aramid | p-Aramid | p-Aramid | p-Aramid | p-Aramid |
| Garntyp | Filamentgarn | Filamentgarn | Filamentgarn | Filamentgarn | Filamentgarn |
| Konstruktion | 1100x1 | 1100x1 | 1100x1 | 1100x1 | 1100x1 |
| 1. Drehung [tpm] | 360 | 160 | 300 | 230 | 230 |
| Corddicke [mm] | 0,4 | 0,35 | 0,36 | 0,4 | 0,4 |
| Laufzeit in h, Soll > 300h | 175 | 122 | 200,5 | 457 | 568 |

## Patentansprüche

1. Schrägverzahnter Antriebsriemen, umfassend einen Grundkörper aus elastomerem Material mit in einer Zahnteilung einander beabstandeten Zähnen,
wobei in dem Grundkörper in einer Längsrichtung eine Mehrzahl von Zugsträngen angeordnet und von dem elastomeren Material des Grundkörpers umschlossen ist,
wobei die Zugstränge aus einem einfach gedrehten Garn aus p-Aramid aufgebaut sind,
**dadurch gekennzeichnet, dass**
der Außendurchmesser des Zugstrangs zwischen 0,3 mm bis 0,45 mm beträgt und die Drehung des Garnes zwischen 210 bis 290 tpm beträgt.

2. Schrägverzahnter Antriebsriemen nach Anspruch 1,
**dadurch gekennzeichnet, dass**
der Außendurchmesser des Zugstrangs zwischen 0,35 mm bis 0,42 mm beträgt.

3. Schrägverzahnter Antriebsriemen nach einem der vorhergehenden Ansprüche,
**dadurch gekennzeichnet, dass**
das Gewicht des Garnes zwischen 200 bis 2000 dtex beträgt.

4. Schrägverzahnter Antriebsriemen nach Anspruch 3,
**dadurch gekennzeichnet, dass**
das Gewicht des Garnes zwischen 400 dtex bis 1500 dtex beträgt.

5. Schrägverzahnter Antriebsriemen nach einem der vorhergehenden Ansprüche,
**dadurch gekennzeichnet, dass**
die Drehung des Garnes zwischen 210 bis 250 tpm beträgt.

6. Schrägverzahnter Antriebsriemen nach einem der vorhergehenden Ansprüche,
**dadurch gekennzeichnet, dass**
das Garn aus Multifilamenten aufgebaut ist.

7. Schrägverzahnter Antriebsriemen nach einem der vorhergehenden Ansprüche,
**dadurch gekennzeichnet, dass**
der Zugstrang eine Innenpräparation aufweist, wobei die Innenpräparation zu 25 bis 60 Volumen % Elastomerpartikel aufweist.

8. Schrägverzahnter Antriebsriemen nach Anspruch 7,
**dadurch gekennzeichnet, dass**
die Elastomerpartikel hydrierten Nitrilkautschuk (HNBR) und/oder Chlorsulfoniertes Polyethylen (CSM) und/oder Styrol-Butadien-Kautschuk (SBR) und/oder Chloropren-Kautschuk (CR) und/oder Vinylpyridin (VP) und/oder Naturkautschuk (NR) aufweisen.

9. Schrägverzahnter Antriebsriemen nach einem der Ansprüche 7 oder 8,
**dadurch gekennzeichnet, dass**
die Innenpräparation einen Duroplast oder einen Thermoplast aufweist.

10. Schrägverzahnter Antriebsriemen nach einem der vorhergehenden Ansprüche,
**dadurch gekennzeichnet, dass**
der Winkel der Schrägverzahnung bezogen auf eine Achse quer zur Längsrichtung des Antriebsriemens zwischen 4° bis 8° beträgt.

11. Schrägverzahnter Antriebsriemen nach einem der vorhergehenden Ansprüche,
**dadurch gekennzeichnet, dass**
die Zahnteilung zwischen 1,5 bis 2,5 mm beträgt.

12. Schrägverzahnter Antriebsriemen nach einem der vorhergehenden Ansprüche,
**dadurch gekennzeichnet, dass**
die Breite des Antriebsriemens mindestens das 6-fache der Zahnteilung beträgt.

13. Lenkungsgetriebe in einer elektromechanischen Lenkung eines Kraftfahrzeugs mit einem schrägverzahnten Antriebsriemen nach einem der Ansprüche 1 bis 11.

## Claims

1. Helically toothed drive belt comprising a main body made of elastomeric material comprising teeth spaced apart from one another by a tooth pitch, wherein a plurality of tensile strands is arranged in the main body in a longitudinal direction and surrounded by the elastomeric material of the main body,
wherein the tensile strands are constructed from a singly twisted p-aramid yarn,
**characterized in that**
the external diameter of the tensile strand is between 0.3 mm and 0.45 mm and the twist of the yarn is between 210 and 290 tpm.

2. Helically toothed drive belt according to Claim 1,
**characterized in that**
the external diameter of the tensile strand is between 0.35 mm and 0.42 mm.

3. Helically toothed drive belt according to either of the preceding claims,
**characterized in that**
the weight of the yarn is between 200 and 2000 dtex.

4. Helically toothed drive belt according to Claim 3,
**characterized in that**
the weight of the yarn is between 400 dtex and 1500 dtex.

5. Helically toothed drive belt according to any of the preceding claims,
**characterized in that**
the twist of the yarn is between 210 and 250 tpm.

6. Helically toothed drive belt according to any of the preceding claims,
**characterized in that**
the yarn is constructed from multifilaments.

7. Helically toothed drive belt according to any of the preceding claims,
**characterized in that**
the tensile strand comprises an internal preparation, wherein the internal preparation comprises 25% to 60% by volume of elastomer particles.

8. Helically toothed drive belt according to Claim 7,
**characterized in that**
the elastomer particles comprise hydrogenated nitrile rubber (HNBR) and/or chlorosulfonated polyethylene (CSM) and/or styrene-butadiene rubber (SBR) and/or chloroprene rubber (CR) and/or vinylpyridine (VP) and/or natural rubber (NR).

9. Helically toothed drive belt according to either of Claims 7 or 8,
**characterized in that**
the internal preparation comprises a thermoset or a thermoplastic.

10. Helically toothed drive belt according to any of the preceding claims,
**characterized in that**
the angle of the helical teeth relative to an axis perpendicular to the longitudinal direction of the drive belt is between 4° and 8°.

11. Helically toothed drive belt according to any of the preceding claims,
**characterized in that**
the tooth pitch is between 1.5 and 2.5 mm.

12. Helically toothed drive belt according to any of the preceding claims,
**characterized in that**
the width of the drive belt is at least 6 times the tooth pitch.

13. Steering gear in an electromechanical steering system of a motor vehicle having a helically toothed drive belt according to any of Claims 1 to 11.

## Revendications

1. Courroie d'entraînement à denture hélicoïdale, comprenant un corps de base en matériau élastomère présentant des dents écartées les unes des autres d'un pas de denture,
une multitude de brins de traction étant agencés dans le corps de base, dans une direction longitudinale, et entourés par le matériau élastomère du corps de base, les brins de traction étant constitués d'un fil monotorsadé en p-aramide,
**caractérisée en ce que**
le diamètre externe du brin de traction est situé entre 0,3 mm et 0,45 mm et la torsion du fil est située entre 210 à 290 t/m.

2. Courroie d'entraînement à denture hélicoïdale selon la revendication 1,
**caractérisée en ce que**
le diamètre externe du brin de traction est situé entre 0,35 mm et 0,42 mm.

3. Courroie d'entraînement à denture hélicoïdale selon l'une des revendications précédentes,
**caractérisée en ce que**
le poids du fil est situé entre 200 et 2000 dtex.

4. Courroie d'entraînement à denture hélicoïdale selon la revendication 3,
**caractérisée en ce que**
le poids du fil est situé entre 400 et 1500 dtex.

5. Courroie d'entraînement à denture hélicoïdale selon l'une des revendications précédentes,
**caractérisée en ce que**
la torsion du fil est située entre 210 et 250 t/m.

6. Courroie d'entraînement à denture hélicoïdale selon l'une des revendications précédentes,
**caractérisée en ce que**
le fil est constitué de filaments multiples.

7. Courroie d'entraînement à denture hélicoïdale selon l'une des revendications précédentes,
**caractérisée en ce que**
le brin de traction présente une préparation interne, la préparation présentant des particules élastomères à raison de 25 à 60% en volume.

8. Courroie d'entraînement à denture hélicoïdale selon la revendication 7,
**caractérisée en ce que**
les particules élastomères présentent du caoutchouc de nitrile hydrogéné (HNBR) et/ou du polyéthylène chlorosulfoné (CSM) et/ou du caoutchouc de styrène-butadiène (SBR) et/ou du caoutchouc de chloroprène (CR) et/ou de la vinylpyridine (VP) et/ou du caoutchouc naturel (NR).

9. Courroie d'entraînement à denture hélicoïdale selon l'une des revendications 7 ou 8,
**caractérisée en ce que**
la préparation interne présente une matière thermodurcissable ou une matière thermoplastique.

10. Courroie d'entraînement à denture hélicoïdale selon l'une des revendications précédentes,
**caractérisée en ce que**
l'angle de la denture hélicoïdale, par rapport à un axe transversal à la direction longitudinale de la courroie d'entraînement, est situé entre 4° et 8°.

11. Courroie d'entraînement à denture hélicoïdale selon l'une des revendications précédentes,
**caractérisée en ce que**
le pas de denture est situé entre 1,5 et 2,5 mm.

12. Courroie d'entraînement à denture hélicoïdale selon l'une des revendications précédentes,
**caractérisée en ce que**
la largeur de la courroie d'entraînement représente au moins 6 fois le pas de denture.

13. Mécanisme de direction dans une direction électromécanique d'un véhicule automobile présentant une courroie d'entraînement à denture hélicoïdale selon l'une des revendications 1 à 11.
